# EUROPEAN PATENT APPLICATION

(11) **EP 4 176 959 A1**
(43) Date of publication of application: **10.05.2023**
(21) Application number: 22179536.2
(22) Date of filing: 17.06.2022
(51) Int. Cl.: B01D 53/08

(54) **GAS TREATMENT DEVICE**

(30) Priority: 17.06.2021 NL 2028473
(71) Applicant: Greensanesolution B.V., 3861 RD Nijkerk (NL)
(72) Inventor: DE VOS, Willem Adriaan, 6741 JP LUNTEREN (NL); STAAL, Henry, 3861 VH NIJKERK (NL); MUIS, Jan, 8224 CT LELYSTAD (NL)
(74) Representative: EP&C

(57) **Abstract**

A gas treatment device (2) comprises a rotatable container (6) for receiving particulate purging agent. The container (6) defines an annular treatment chamber (8) and is provided with a gas inlet (10), a gas outlet (12), a purging agent inlet (14) and a purging agent outlet (18). Measuring means (20) for measuring a contaminant concentration in the gas, are arranged downstream of the gas inlet (10). The device also comprises discharging means (56) for spent purging agent, including a vacuum source, and supplying means (50), for fresh purging agent. A cutting plate (54) having an annular section shape is also provided. This cutting plate (54) is horizontally arranged above the purging aging outlet (18) and extends radially into the treatment chamber 8() and annularly from the purging agent outlet (18).

## Description

The invention relates to a gas treatment device for treating a contaminated gas using a particulate purging agent and related aspects thereof.

Frequently industrial processes result in the contamination of a gas, for example air, by contaminants. Volatile organic compounds (VOCs) are an example of these contaminants. Emission of the contaminants into the surrounding atmosphere is undesired in view of environmental and health considerations. Legislation has put increasingly stringent measures to reduce or even prohibit emission of these harmful contaminants. Therefore contaminated gas is often treated to reduce the amount of contaminants below a level set by legislation. For example, in spray-painting of objects, like automotive parts, furniture, household articles and building materials, in a dedicated spray-painting booth, the air is polluted with solvent and other contaminants, which air needs to be purified before being exhausted into the atmosphere or before being recycled back to the spray-painting booth. Treatment of contaminated air in order to reduce the amount of contaminants frequently involves passing the contaminated air over one or more units comprising a purging or filtering agent, such as activated carbon, (also known as active carbon, active or activated charcoal). The contaminants like VOCs are bonded to the purging or filtering agent by adsorption and/or absorption. Once the purging agent becomes saturated with contaminants, the binding activity drops and the purging agent needs to be replaced with fresh purging agent. Alternatively the purging agent is regenerated and recycled.

The present applicant has designed a gas treatment system, in particular for treating contaminated air from a spray-painting booth, which is described in Dutch patent application no. 2024499 (published after priority date present application).

This device comprises a container for receiving (or is loaded with) an amount of particulate purging agent like activated carbon, in bulk. The upstanding container walls thereof that define an annular treatment chamber containing the purging agent, are impermeable for the purging agent and permeable for the gas. In a controlled manner spent purging agent is discharged at the bottom through a purging agent outlet, based on measuring the contaminant concentration in the gas after treatment using a suitable sensor and the discharged amount is replaced by fresh purging agent that is supplied from above through a purging agent inlet. At least one of the upstanding walls of the container is able to rotate by means of rotation means.

Now it has appeared that discharging the particulate material leaves something to be desired, in particular the abrasive properties of the particulate material like activated carbon causes failure of the discharging means, as well as undesired dust generation caused by crushing the particulate purging agent. Moreover, it has been difficult to maintain a desired saturation gradient from the purging agent inlet to the purging agent outlet during operation. Also supplying a controlled amount of fresh material and proper distribution thereof without the risk of overfilling and spillage could be improved.

Therefore the invention aims at reducing or even obviating one or more of the above-mentioned disadvantages.

Accordingly an object of the present invention is to improve the functionality and reliability of the discharging means. Another object of the invention is to allow maintenance of a desired saturation gradient from the purging agent inlet to the purging agent outlet during operation. A further object of the present invention is to improve the functionality and reliability of the supplying means.

The gas treatment device according to the invention comprises
- a container for receiving a bed of particulate purging agent in bulk therein, said container being provided with a gas inlet to and a gas outlet from the container, and being provided with a purging agent inlet to and a purging agent outlet from the container; wherein the container comprises a bottom, gas-permeable and purging agent-impermeable inner and outer upright cylindrical walls, arranged surrounding a cavity and spaced apart from each other, and a top wall, such that the container defines an annular treatment chamber for the particulate purging agent, wherein the purging agent outlet is arranged at the bottom section of the treatment chamber, and the purging agent inlet is arranged at the upper section of the container;
- measuring means, configured for measuring a contaminant concentration in gas, arranged downstream of the gas inlet of the container;
- discharging means, configured for discharging at least a part of the purging agent through the purging agent outlet when the contaminant concentration measured with the measuring means is above a threshold value;
- supplying means, configured for supplying fresh purging agent through the purging agent inlet for replacing the discharged purging agent;
- rotating means, configured for rotating at least one cylindrical wall of the container around its vertical axis;
wherein the outer upright cylindrical wall is sealed to the bottom by a seal allowing to slidingly engage the purging agent outlet, and the discharge means comprise a vacuum source, connected to the purging agent outlet, configured for sucking purging agent from the treatment chamber, further comprising a cutting plate having an annular section shape with a leading plate section and a trailing plate section, the cutting plate being horizontally arranged above the purging aging outlet and radially extending into the treatment chamber and annularly extending with its leading plate section and the trailing plate section from the purging agent outlet.

The gas treatment device according to the invention comprises a container, the walls of which define an annular treatment chamber having a top purging agent inlet in the top section of the annular treatment chamber, preferably in the top wall, and a bottom purging outlet in the bottom section of the annular treatment chamber, preferably at the transition of the outer upright wall and the bottom. The inner and outer upstanding walls of the container are permeable to gas and impermeable to the particulate purging agent, such that the bed of purging agent is retained in the treatment chamber and the gas flows in cross-flow to the particulate flow. E.g. the inner and outer upstanding walls are made from an appropriate mesh material. The container or at least one wall thereof can rotate by means of the rotating means. The outer upright wall is arranged in a sealing manner to the bottom wall, e.g. by means of a suitable circumferential seal, such as one or more rubber strips, which seal engages in a sealing manner the purging agent outlet extending through the seal,. Thus the outer upright wall is typically suspended at its top and "floats" in relation to the bottom wall, although typically both are rotated together with the inner upright wall. Typically the top wall is stationary and engages in a sealing manner the inner and outer upright wall,. As said, preferably the top wall is provided with the purging agent inlet. When the contaminant concentration in the gas outflow exceeds the threshold value thereof as measured with the measuring means, a certain amount of spent purging agent is sucked from the treatment chamber through the purging agent outlet by means of the vacuum applied by the vacuum source, the container is rotated over a length related to the discharged amount and the discharged amount is made up by supplying fresh purging material through the purging agent inlet into the treatment chamber. Typically withdrawal of spent purging agent, rotation of the container and supply of fresh purging agent are performed simultaneously. Due to the (intermittently) controlled operation of the discharging means, rotating means and suppling means a downwardly spiralling saturation gradient is established in the bed of particulate purging agent from the purging agent inlet to the purging agent outlet, while direct vertical displacement of fresh material from the purging agent inlet through the bed in the annular treatment chamber towards the discharge outlet is prevented, thereby ensuring that the bed volume and filtering potential of the purging material being 100% (0% saturation) at the top purging agent inlet and 0% (100% saturation) at the bottom purging agent outlet can be utilized almost completely up to its full extent. Moreover, the direct vertical displacement of purging agent from the inlet to the outlet is prohibited by the cutting plate that covers partially the annular treatment chamber at the position of the purging agent outlet, which ensures that the downwardly spiralling saturation gradient described above is maintained during operation. By rotation of the container the stationary leading edge of the stationary cutting plate "cuts" horizontally a slice from the bed, which is sucked away through the purging agent outlet. By further rotation of the container the emptied volume below the cutting plate is refilled beyond the trailing edge thereof from the above bed of purging agent. Smooth refilling can be improved by means of a downwardly inclined (towards bottom wall) trailing section, at least the end part thereof.

Furthermore, by applying vacuum to the outlet only when spent purging agent needs to be discharged the accuracy of the amount discharged is improved. The abrasive action due to the nature of the purging agent and the weight of the bed above the amount of purging material being discharged which weight is carried by the cutting plate in the invention, is reduced effectively. Thereby dust generation is also reduced significantly.

It is preferred to use purging agent which originates from plant material, such as wood, e.g. in the form of sawdust and/or converted to active carbon, in order to remove contaminants from the gas by binding processes such as adsorption and/or absorption. Active carbon is preferred. Plant materials such as wood, are able to convert carbon dioxide into food using energy from light by photosynthesis. Use of the device according to the invention may involve a step involving the release of carbon dioxide, e.g. the step e) of incineration. Selecting purging agent originating from plant material thereby only produces carbon dioxide which previously had been converted from carbon dioxide, thus reducing the carbon footprint of the method and making it preferred over other sources of active carbon.

In an embodiment the cutting plate extends the full width of the annular treatment chamber from the outer wall to the inner wall, thereby further ensuring its function of covering the purging agent outlet and slicing the bed of purging agent, thereby maintaining the downwardly spiralling saturation gradient in the bed.

In an embodiment the lower face of the cutting plate is provided with a guide seal for guiding purging agent towards the outlet opening and separating or sealing the space below the leading section and purging agent outlet from the space below the trailing section, wherein preferably the guide seal possesses some flexibility due to its construction, such as shape and/or selection of construction material, thereby reducing the risk of particulate purging agent getting stuck and/or crushed between the lower edge of the guide and the rotating bottom of the container upon rotation. Furthermore, advantageously the guide seal extends from the inner upright wall in the leading section of the cutting plate to the outer upright wall in the trailing section downstream of the purging agent outlet, preferably in smoothly curved path in order to further reduce the above risk. A guide seal comprising a brush is a preferred embodiment. The guide seal that acts as a separation element (some kind of air seal) between on the one hand the space below the leading plate section and purging agent outlet and on the other hand the space below the trailing plate section of the cutting plate effectively prevents that particulate purging agent is sucked from the bed at the trailing section during discharge, which would disturb the downwardly spiralling saturation gradient.

In order to allow service and maintenance to the cutting plate and purging agent outlet including removal of these parts preferably the outer wall is provided with a horizontal slit at a level above the height of the cutting plate, and the device is equipped with a cover plate having an annular section shape covering at least the cutting plate, which cover plate is insertable through the slit into the treatment chamber. Thus the cover plate has a shape and dimensions conforming to those of the cutting plate in the annular treatment chamber. By positioning the slit at the position of the purging agent outlet and cutting plate through rotation of the container and inserting the cover plate through the slit the unit comprising the cutting plate, the outlet and the optional guide seal can be demounted and reinstalled again without disturbing the bed.

The inlet of fresh purging agent is preferably an opening in the top wall.

In a further embodiment the supplying means comprise a supply conduit extending into the purging agent inlet at an angle in a direction opposite to the rotation direction of the container. It has appeared that by arranging the supply conduit of the supplying means, that extends through the purging agent inlet arranged in the top wall of the container, in a direction opposite to the rotation direction, gradual and uniform supply occurs automatically (without actuation of e.g. a control valve ), while overfilling and the risk of spillage of purging agent through the seals between the stationary top wall and rotating upright walls does not occur. In fact the upper layer of the bed prevents the overfilling by "inhibiting" flow of particulates through the supply conduit unless the bed level is lowered by discharging an amount of spent purging agent through the purging agent outlet.

In a further embodiment thereof the supply conduit has a circular inlet end having a first cross-section and an outlet end having a smaller cross-section, preferably a smaller rectangular cross-section. The smaller outlet end ensures that particulate purging agent at the smaller outlet forced by the rotating bed can travel into the widening conduit body and contributes to the uniform distribution of purging agent.

In a further embodiment the supplying means also comprise a cyclone hopper having a lower purging agent hopper outlet connected to the purging agent inlet of the container, preferably by the above supply conduit. In a preferred embodiment thereof the cyclone hopper delimits a hopper chamber having a funnel outlet connected to the purging aging inlet and provided with a valve at the lower end of the cyclone hopper, wherein the cyclone header comprises a tangential lower inlet for a gas flow comprising the particulate purging agent and a tangential upper outlet for the gas flow (depleted from particulate purging agent), connected to a vacuum source, wherein a cylinder section (also called vortex finder) is arranged concentrically to the vertical axis of the cyclone hopper at a distance from the top wall of the cyclone hopper leaving free a top gap and extending in the chamber below the tangential lower inlet, and a downwardly spiralling separation element in the side gap between the outer circumference of the cylinder section and the wall of the cyclone hopper separating the tangential lower inlet from the tangential upper outlet. It has been found that using a cyclone hopper as described above allows to ensure distribution of a controlled suppletion amount of particulate purging agent onto the upper surface of the bed of purging agent in the treatment chamber without dust formation and with separation of the purging agent from the gas flow in the cyclone hopper due to the co-tangential inlets and the spiralling (typically one turn suffices) separation plate. A gas flow such as air comprising the particulate purging agent enters the hopper chamber through the tangential lower inlet and spirals down along the lower face of the downwardly spiralling separation element.. Separation of the particulates occur due to the centrifugal forces encountered. The gas flow enters the cylinder section typically having a larger cross section than the upper tangential outlet (and the width of the spiralling element) where the speed of the gas flow is substantially reduced, such that further separation occurs. The gas flow exits the open top end of the cylinder section and due to the co-tangential arrangement of the upper outlet the gas flow flows over the top face of the spiralling element in a direction opposite to the direction of the gas flow at the lower face. Thus between the intel and the outlet the circulating gas flow direction is reversed, which further contributes to effective separation of the particulate purging agent..

The supply means including the arrangement of the supply conduit and optional vacuum cyclone hoper described above is also a separate aspect of the invention that can be used with any gas treatment device requiring controlled dosing of delicate particulate materials, but with other type of discharging means not having a cutting plate as described above.

In a further embodiment said valve is a ball valve arranged below the hopper outlet in a separate valve chamber, the valve chamber having a cross section larger than the funnel outlet, thereby reducing the risk of blocking the hopper outlet by accumulation of the purging agent. The outlet of the valve chamber is connected to the supply conduit. Furthermore, by proper control of the suction of the vacuum source of the discharging means the hopper chamber and valve chamber can be emptied fully before refilling the cyclone hopper. The necessary closure of the hopper outlet by the valve does not suffer from purging agent being left on the valve thereby reducing its sealing capacity, which would be detrimental for refilling the cyclone hopper.

The gas flow comprising the purging agent is preferably derived from a stock container for containing an inventory of purging agent provided with an outlet connected to a gas conduit having a gas inlet opening for sucking gas and a gas outlet connected to the tangential lower inlet of the cyclone hopper.

When the valve closes the funnel outlet of the vacuum cyclone hopper, the vacuum source connected to the tangential upper outlet sucks gas (air) through the gas inlet opening. The air flow thus established entrains the particulate purging agent from the stock container and the resulting gas flow comprising the particulate purging agent flows through the tangential upper inlet of the vacuum cyclone hopper, in the hopper chamber of which the particulate purging agent is separated until the hopper chamber is filled, e.g. measured with a level sensor. Then the gas flow is stopped, and the valve at the funnel outlet is opened again.

Advantageously the gas treatment device according to the invention is used in a combination of a gas treatment device and a non-gas-fired incinerator, downstream of the purging agent outlet of the container, for incinerating the purging agent discharged through the purging agent outlet. When the purging agent comprises active carbon for purging VOCs from gas, incineration converts the spent active carbon mainly into carbon dioxide (CO2), nitrogen oxide (NOx), water (H2O) and heat. Active carbon with such a relatively high calorific value does not require the addition of (gaseous) fuel for firing the incinerator.

In an embodiment of the combination, the combination further comprises a heat exchanger, for heating a gas flow using heat originating from the incineration of the purging agent discharged through the purging agent outlet, wherein advantageously the gas flow comprises gas from the gas outlet of the container.

Upon incineration in the combination according to the invention heat is released, which can be utilized, e.g. for heating another (process) gas flow, such as the cleaned gas flow from the gas treatment device that can be re-used partially in the process, such as spray-painting in a spray-painting booth, from which the contaminated gas flow was derived or in any other suitable process. An example of the latter is a central heating system.

In another preferred embodiment of the combination, the combination further comprises temporary storage means, such as a receptacle or other vessel, for storing the spent purging agent discharged from the container, downstream of the container and upstream of the incinerator. Intermediate storage between the gas treatment device and incinerator allows to incinerate the spent purging agent at any time, that heat released upon incineration of the purging agent, is required, e.g. dependent on the climate seasons, thereby increasing the versatility of the combination.

In a preferred embodiment of the combination, the combination further comprises a dust filter, upstream of the container, thereby avoiding contact between the dust and the purging agent. The dust filter can be installed in the exhaust of a production space, such as a spray-painting booth, which is typically used for spray-painting of e.g. vehicles, furniture, and other parts. A dust filter, if present, may for instance be provided as a part of the gas exhaust of the production space.

These invention will be further illustrated by the attached drawing, wherein
Fig. 1 is a schematic diagram of an embodiment of combination comprising a gas treatment device according to the invention and an incinerator;
Fig. 2 shows an embodiment of a gas treatment device according to the invention;
Fig. 3 and 4 show an embodiment of the purging agent discharging means as part of the gas treatment device according to the invention;
Fig. 5 shows an embodiment of a cover plate of the gas treatment device according to the invention; and
Figs. 6 and 7 show an embodiment of the purging agent supplying means as advantageously used in the gas treatment device according to the invention.

All figures are purely diagrammatical in nature and not drawn to scale. In the figures similar parts are indicated by the same reference numerals.

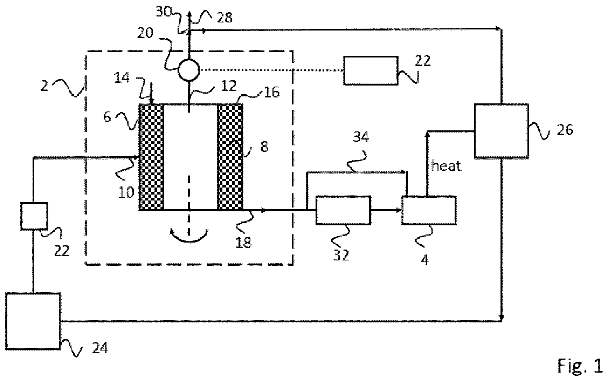

Fig. 1 discloses a combination according to the invention. This combination comprises a gas treatment device 2 and an incinerator 4. The gas treatment device 2 comprises a container 6 that can rotate around its vertical axis by means of rotating means (not shown in Fig. 1), that delimits an annular treatment chamber 8 that contains a bed of particulate purging agent like active carbon. The container 6 is provided with a gas inlet 10 for introducing a contaminated gas flow into the treatment chamber 8 and a gas outlet 12 for discharging the gas flow after contacting the purging agent in order to remove contaminants such as VOCs therefrom. Fresh purging agent is introduced in the treatment chamber 8 through purging agent inlet 14 situated in the top wall 16 of the container 6 by means of supplying means (not shown in Fig. 1) for supplying fresh purging agent. Spent purging agent such as saturated active carbon is withdrawn at the bottom of the treatment chamber 8 through purging agent outlet 18 by means of discharging means (also not shown in Fig. 1). A sensor 20 is provided to measure the contaminant concentration in the gas flow exiting the gas treatment chamber 8. This sensor 20 measures the contaminant concentration in the gas flow and a controller 22 controls the discharging means, the rotating means and the supplying means, based on a measurement signal derived from the sensor 20 and comparison with a set threshold value of the contaminant concentration.

In the combination the gas inlet 10 of the gas treatment device 2 is connected via a dust filter 22 to a gas exhaust of a production space 24 such as a paint-spraying booth. After treatment in the gas treatment device 2 the cleaned/purged gas is returned to production space 24 via heat exchanger 26 and/or partially emitted through exhaust 28 using a three-way valve 30. In the heat exchanger 28 the cleaned gas flow is heated by heat from incinerator 4, wherein spent purging agent derived from temporary storage 32 is incinerated. The storage 32 receives the spent purging agent from the gas treatment device 2 by means of the discharging means. Spent purging agent from the gas treatment device 2 can be transferred directly to the incinerator 4 via a bypass 34 over storage 32 using suitable valving (not shown). Alternatively, for direct incineration storage 32 can be omitted.

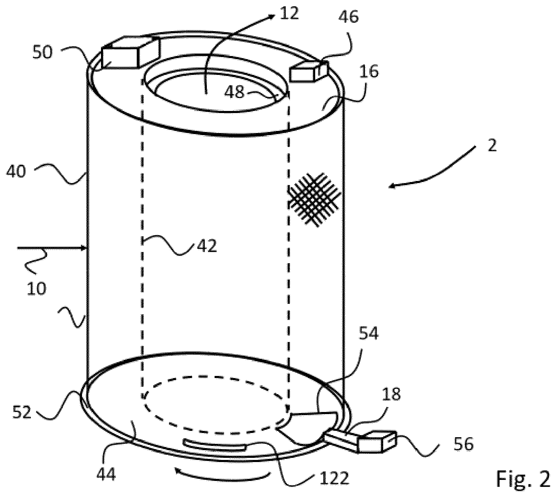

Fig. 2 is a schematic representation of an embodiment of the gas treatment device 2 comprising the container 6. Container 6 comprises a cylindrical outer upstanding wall 40, a cylindrical inner upstanding wall 42, the top wall 16 and a bottom 44. Together these walls define the annular treatment chamber 8. Typically, the top wall 16 is suspended from a frame (not shown) and thus stationary with respect to the rotatable upstanding walls 40, 42 and bottom wall 44. Suitable sealing members, such as rubber, are positioned at the inner and outer periphery of the top wall 16 allowing the outer and inner upstanding walls 40, 42 to slidingly engage the stationary top wall 16. The inner upstanding wall 42 is driven by motor 46 through ring bearing 48 and thus also the connected bottom 44 and outer upstanding wall 40.. The top wall 16 having the purging agent inlet 14 is also provided with the supplying means, generally indicated by reference numeral 50 The outer upstanding wall 40 is internally connected to the inner outstanding wall 42. At its lower edge the outer upstanding wall 40 slidingly engages the bottom wall 44, e.g. through a rubber sealing member 52, allowing the wall to pass a stationary cutting plate 54 having the purging agent outlet 18 that extend into the treatment chamber 8. As diagrammatically shown, said outlet 18 is connected to a vacuum source 56.

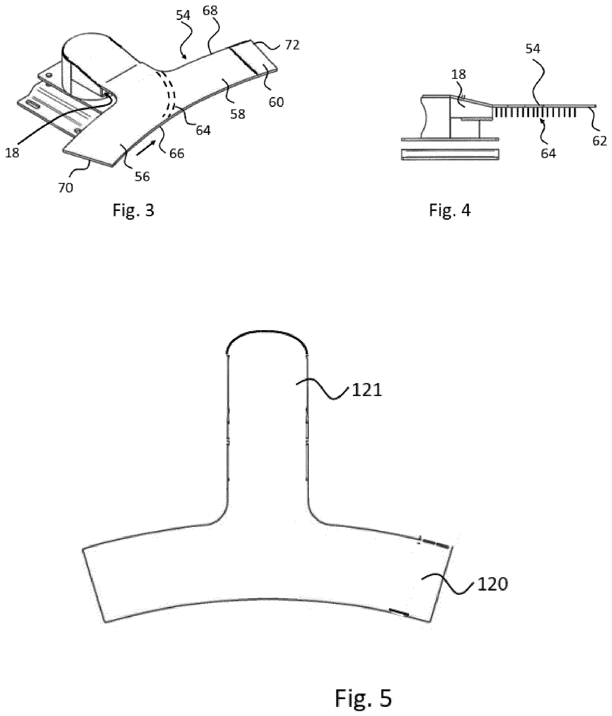

Fig. 3 and 4 show an embodiment of the cutting plate 54 and outlet 18 in more detail. The cutting plate 54 has an annular section shape conforming to a section of the annular treatment chamber 8 that extends from the outer upstanding wall 40 up to the inner upstanding wall 42. As seen in the direction of rotation of the container 6, indicated by an arrow, the cutting plate 54 has a leading plate section 56 and a trailing plate section 58 having a downwardly inclined end section 60. At its lower face 62 the cutting plate 54 is provided with a guide seal 64, in particular a brush, from a position at the inner edge 66 of the leading plate section 56 to a position (just) beyond the outlet 18 at the outer edge 68 of the trailing plate section 58. A mounting plate 69 is provided for fixing the unit of cutting plate 54 and purging agent outlet 18 to a base.

Once the sensor 20 and controller 22 measure and determine that the contaminant concentration in the gas flow leaving the gas treatment chamber 8 is higher than the set threshold value, the controller 22 controls the rotating means (motor 46) and the container 6 starts to rotate. Upon rotation the leading edge 70 of the cutting plate 54 cuts through the bed of purging agent and a slice of purging agent below the leading plate section 56 is sucked through the outlet 18 by means of the vacuum means 56 that are also controlled by controller 22. The guide seal 64 effectively prevents that purging material is sucked from the bed of purging material at the trailing edge 72 of the cutting plate 54 and also directs when necessary the purging agent particulates to the outlet 18. Simultaneously or consecutively the controller 22 also drives the purging agent supplying means 50, that deliver a controlled amount of fresh purging agent on top of the bed of purging agent in the treatment chamber 8 through the inlet 14 in the top wall 16. The supplied amount of fresh purging agent is similar to the amount of saturated purging agent that is withdrawn from the treatment chamber 8. Due to the establishment of a void volume below the trailing plate section 58 in combination with the rotation of the container, the withdrawal of spent purging agent and the supply of fresh purging agent the bed of purging agent in the treatment chamber 8 achieve a downwardly spiralling saturation gradient from the purging agent inlet 14 to the purging agent outlet 18, while direct vertical transfer of purging agent from the inlet 14 to the outlet 18 is prevented, thereby enabling to utilize the full absorption/adsorption capacity of the purging agent volume contained in the treatment chamber 8.

Fig. 5 shows a cover plate 120 having a handle 121 that can be inserted through horizontal slit 122 in the outer upstanding wall 40 as shown in Fig. 2 in order to allow demounting the unit of cutting plate 54 and purging agent outlet 18.

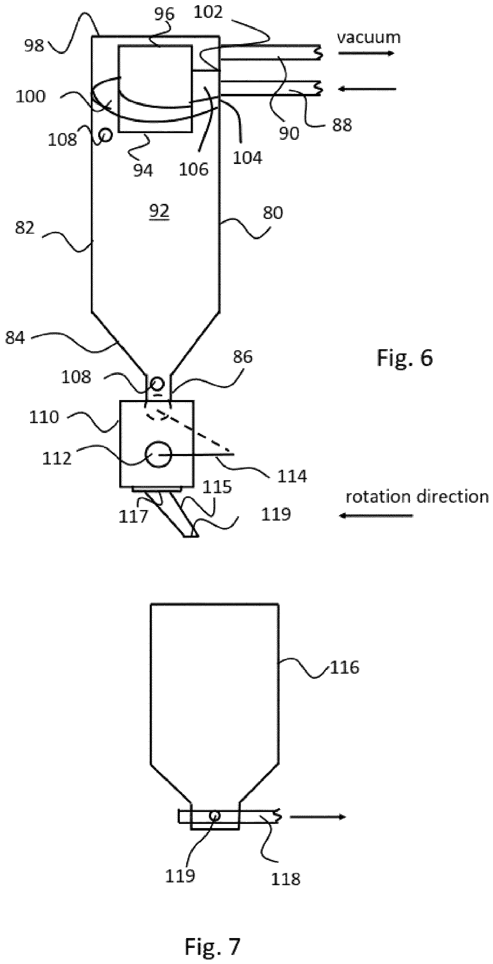

Figs. 6 and 7 show an embodiment of supplying means 50. Fig. 4 shows a cyclone hopper 80 having a generally cylindrical housing 82 having a lower tapering section 84 tapering towards a lower hopper outlet 86, a tangentially oriented gas hopper inlet 88 for a gas flow comprising the particulate purging agent and an equally tangentially oriented gas hopper outlet 90 for discharging the gas flow from which the particulate purging agent has been separated by cyclone action and connected to a vacuum source (not shown) at a level above the inlet 88. In the hopper chamber 92 within the housing 82 a cylindrical pipe section 94 is arranged, the top 96 of which leaves free a small gap towards the top wall 98 of the housing 82. This pipe section 94 is mounted to the inner walls of the housing 82 through a spiralling separation element 100 of which one end 102 is positioned at a height between the inlet 88 and outlet 90, in this case one turn spiralling down. The turn end 104 ends below the tangential inlet 88. The turn ends 102 and 104 are connected by a vertical plate section 106.. Thus the spiralling separation element 94 separates the inlet 88 from the outlet 90, such that the gas flow needs to flow from the inlet 88 through the cylinder section 94 towards the outlet 90. Although when the volume of particulate material in the hopper chamber 92 reaches the lower edge of the cylindrical pipe section 94 and gas flow is strongly impeded, level sensors 108 sensing an empty state and filled state respectively may be provided as control means. The lower hopper outlet 86 opens into a chamber 110, wherein a vertically displaceable ball 112 for closing the outlet is arranged, which can be driven by means of a suitable actuator such as a double rod system driven by a pneumatic piston cylinder assembly, indicated by 114. The chamber 110 has a larger cross section than the funnel outlet 86, such that blocking of the outlet 86 by accumulated purging agent particulates is prevented. Supply conduit 115 having a circular supply end 117 connected to the valve chamber 110 and having a square outlet end 119 extending into the purging agent inlet 14 of the container 6 is arranged at an angle to the bed top in the container 6 and in a direction opposite to the rotation direction (diagrammatically indicated by an arrow).

The gas flow comprising the particulate purging agent fed to the gas inlet 88 can be generated from a large storage bin 116 having an outlet opening that opens into a conduit 118 having an opening 119, which conduit118 is connected to the gas hopper inlet 88 and thus to the vacuum source (not shown).

## Claims

1. Gas treatment device (2), comprising:
- a container (6) for receiving a bed of particulate purging agent in bulk therein, said container (6) being provided with a gas inlet (10) to and a gas outlet (12) from the container (6), and being provided with a purging agent inlet (14) to and a purging agent outlet (18) from the container (6), wherein the container (6) comprises a bottom (44), gas-permeable and purging agent-impermeable inner and outer upright cylindrical walls (42; 40), arranged surrounding a cavity and spaced apart from each other, and a top wall (16), such that the container (6) defines an annular treatment chamber (8) for the particulate purging agent, wherein the purging agent outlet (18) is arranged at the bottom section of the treatment chamber (8), and the purging agent inlet (14) is arranged at the upper section of the container (6);
- measuring means (20), configured for measuring a contaminant concentration in gas, arranged downstream of the gas inlet (10) of the container (6);
- discharging means (56), configured for discharging at least a part of the purging agent through the purging agent outlet (18) when the contaminant concentration measured with the measuring means (20) is above a threshold value;
- supplying means (50), configured for supplying fresh purging agent through the purging agent inlet (14) for replacing the discharged purging agent;
- rotating means, (46, 48) configured for rotating at least one cylindrical wall (40, 42) of the container (6) around its vertical axis;
wherein the outer upright cylindrical wall (40) is sealed to the bottom (44) by a seal (52) allowing to slidingly engage the purging agent outlet (18), and wherein the discharge means comprise a vacuum source (56), connected to the purging agent outlet (18), configured for sucking purging agent from the treatment chamber (8), further comprising a cutting plate (54) having an annular section shape with a leading plate section (56) and a trailing plate section (58), the cutting plate (54) being horizontally arranged above the purging aging outlet (18) and radially extending into the treatment chamber (8) and annularly extending with its leading plate section (56) and the trailing plate section (58) from the purging agent outlet (18).

2. Gas treatment device according to claim 1, wherein the gas inlet (10), gas outlet (12), purging agent inlet (14) and purging agent outlet (18) are arranged for obtaining a downwardly spiralling saturation gradient in the bed of particulate purging agent, the saturation increasing from the purging agent inlet (14) towards the purging agent outlet (18).

3. Gas treatment device according to claim 1 or claim 2, wherein the cutting plate (4) extends into the treatment chamber (8) up to the inner upright wall (42).

4. Gas treatment device according to any one of the preceding claims, wherein the trailing plate section (58) of the cutting plate (54) has a downwardly inclined end part (60).

5. Gas treatment device according to any one of the preceding claims, wherein the lower face (62) of the cutting plate (54) is provided with a guide seal (64), configured for guiding purging agent towards the outlet opening (18) and separating the space below the leading plate section (56) of the cutting plate (54) and purging agent outlet (18) from the trailing plate section (58).

6. Gas treatment device according to claim 5, wherein the guide seal (64) comprises a flexible material.

7. Gas treatment device according to claim 6, wherein the guide seal (64) comprises a brush.

8. Gas treatment device according to any one of the preceding claims, wherein the outer wall (40) of the container (6) is provided with a horizontal slit (122) for receiving a cover plate (120) at a height position above the cutting plate (54), the gas treatment device further comprising a cover plate (120) having an annular section shape covering at least the cutting plate (54), which cover plate (120) is insertable through the slit (122) into the treatment chamber (8).

9. Gas treatment device according to any one of the preceding claims, wherein the supplying means (50) comprise a supply conduit (115) extending into the purging agent inlet (14) at an angle in a direction opposite to the rotation direction.

10. Gas treatment device according to claim 9, wherein the supply conduit (115) has circular inlet end (117) having a first cross-section and an outlet end (119) having a smaller cross-section, preferably a smaller rectangular cross-section.

11. Gas treatment device according to any one of the preceding claims, wherein the supplying means (50) comprise a vacuum cyclone hopper (80) delimiting a hopper chamber (92) having a funnel outlet (86) and provided with a valve (112) at the lower end of the cyclone hopper (80), and a cyclone header comprising a tangential lower inlet (88) for a gas flow comprising the particulate purging agent and a tangential upper outlet (90) for the gas flow, connected to a vacuum source, wherein a cylinder section (94) is arranged concentrically to the cyclone hopper (80) at a distance from the top wall (98) of the cyclone hopper (80) leaving free a gap in the hopper chamber (92) and extending in the hopper chamber (92) below the tangential lower inlet (88), and a spiralling separation element (96) in the gap between the outer circumference of the cylinder section (94) and the inner wall of the cyclone hopper (80) separating the tangential lower inlet (88) from the tangential upper outlet (90).

12. Gas treatment device according to any one of the preceding claims, further comprising a stock container (116) for containing an inventory of purging agent provided with an outlet connected to a gas conduit (118) having a gas inlet opening (119) for sucking gas and a gas outlet connected to the tangential lower inlet (88) of the cyclone hopper (80).

13. Gas treatment device according to any one of the preceding claims, wherein the measuring means (20) comprise a sensor arranged in or downstream of the gas outlet (12).

14. Combination of a gas treatment device according to any one of the preceding claims and a non-gas-fired incinerator (4), downstream of the purging agent outlet (18) of the container (6), for incinerating the purging agent discharged through the purging agent outlet (18).

15. Combination according to claim 14, further comprising a heat exchanger (26), for heating a gas flow using heat originating from the incineration of the purging agent discharged through the purging agent outlet (18), said gas flow preferably comprising gas from the gas outlet (12) of the container (6).

16. Combination according to claim 14 or 15, further comprising temporary storage means (32), for storing the purging agent discharged from the container (6), downstream of the container (6) and upstream of the incinerator (4).

17. Combination according to any of the claims 14 to 16, further comprising a dust filter (22) upstream of the container (6).

18. Combination according to any of the claims 14 to 17, further comprising a production space (24), such as a spray-painting booth, said production space (24) being provided with a gas exhaust in fluid connection with the gas inlet (10) of the gas treatment device (2).

19. Combination according to claim 18, wherein the production space (24) further comprises a gas inlet configured for receiving gas treated with the gas treatment device (2), said combination thereby forming an at least partially closed circuit.
